# EUROPEAN PATENT SPECIFICATION

(11) **EP 3 925 852 B1**
(45) Date of publication and mention of the grant of the patent: **09.10.2024**
(21) Application number: 21179239.5
(22) Date of filing: 14.06.2021
(51) Int. Cl.: B61L 15/00, B61L 23/04, B61F 9/00, B61F 19/04

(54) **OBSTACLE AND DERAILMENT DETECTION DEVICE FOR A RAILWAY VEHICLE**
HINDERNIS- UND ENTGLEISUNGSDETEKTIONSVORRICHTUNG FÜR EIN SCHIENENFAHRZEUG
DISPOSITIF DE DÉTECTION D'OBSTACLE ET DE DÉRAILLEMENT POUR UN VÉHICULE FERROVIAIRE

(30) Priority: 15.06.2020 IN 202041025143
(43) Date of publication of application: 22.12.2021
(73) Proprietor: ALSTOM Holdings, 93400 Saint-Ouen-sur-Seine (FR)
(72) Inventor: FAROOQUI, Asghar, Ali, 560065 BANGALORE (IN)
(74) Representative: Lavoix

(56) References cited:
- DE-A1- 102011 052 070
- KR-A- 20090 032 685
- KR-A- 20100 082 162
- US-A1- 2006 124 024

## Description

The present invention relates to an obstacle and derailment detection device for a railway vehicle.

Such a detection device is intended to be arranged on the front of the railway vehicle, so that it is actuated when the railway vehicle comes colliding with an obstacle, or when the vehicle wheels climb the rail and drop off the rail.

It is already known, from prior art, a detection device comprising a transverse beam intended to be arranged on a front part of the railway vehicle.

An obstacle is detected when said obstacle comes colliding with the transverse beam, with an impact force above a first predefined threshold, usually above 100 daN.

A derailment is detected when the rail comes colliding with the transverse beam, with an impact force above a second predefined threshold, usually above 500 daN. This happens when the vehicle wheels climb the rail and drop off the rail.

KR 2009 0032685 A discloses an obstacle and derailment sensing system of a train. The system comprising an obstacle detection beam 113, a support 130 to hold the sensing system, a pivoting member 111 holding the detection beam 113 and rotatably connected to sensing units 120. The sensing unit 120 may be an ON/OFF switch for generating a ON/OFF signal when the rotary unit is rotated at a contact point after hitting an obstacle.

DE 10 2011 052070 A1 discloses an obstacle deflector 1 comprising a sensor 6 for generating a collision signal by relative motion between a collision beam 4, arm 5 and a support 2. The arm is connected to the support through an articulated joint 7.

KR 2010 0082162 A discloses an obstacle and derailment detection to automatically stop a railway vehicle after collision with an obstacle or the rail. A sensor unit generates a contact signal when the rotation displacement of a rotary shaft connected with a sensing bar is over a set value.

The present invention aims to propose a detection device able to detect both obstacles and derailment, while being more economical than devices from prior art.

To this end, the invention relates to an obstacle and derailment detection device according to claim 1.

Because of the pivot connection, the rod swings towards the contact actuator when the transverse beam collides with an obstacle in the longitudinal direction.

Besides, the transverse beam is also able to swing in case of derailment. Indeed, in case of derailment, the transverse beam comes in contact with the rail, so that it swings backward because of the speed of the railway vehicle.

In both cases, the rod swings towards the contact actuator. Thus, the contact actuator can be actuated in both cases of obstacle or derailment.

The detection device of the invention does not need to differentiate the two cases of obstacle or derailment, by involving a same action (e.g. emergency braking) in the same way in both cases. As a result, the detection device according to the invention is very simple, thus it is economical.

A detection device according to the invention can also comprise any of following features, without departing from the scope defined by the appended claims:
- The contact actuator comprises a switch arranged backward the rod, to be actuated when the rod comes into contact with this switch.
- The detection device comprises a mechanical stop arranged on the support, intended to limit the swing of the transverse beam around the axis.
- Each rod is shaped so that the transverse beam is arranged backward the axis regarding the longitudinal direction, so that the transverse beam is able to swing anticlockwise around the axis when submitted to a force in a vertical upward direction,
- The rod comprises a straight upper part connected to the support by means of the pivot connection, and a lower part connected to the transverse beam, the upper part forming an angle with the lower part, for instance an angle between 5° and 20°, for instance substantially equal to 10°.

The invention also relates to a railway vehicle, caracterized in that it comprises the detection device as defined above, arranged on a front part of the vehicle.

Preferentially, the railway vehicle comprises a leading bogie having a bogie frame, the detection device being arranged in front of the leading bogie, the support being fastened to the bogie frame.

Optionally, the railway vehicle comprises an emergency braking system, connected to the contact actuator to be able to receive the emergency signal, the emergency braking system being configured to implement an emergency braking operation when receiving the emergency signal.

Various aspects and advantages of the invention will be highlighted in the following description, given only as a non-exhaustive example, and made regarding the accompanying figures, as follows:
- Figure 1 is a perspective view of a bogie of a railway vehicle, comprising an obstacle and derailment detection device according to an example of embodiment,
- Figure 2 is a detail of Figure 1, showing the obstacle and derailment detection device with more details,
- Figure 3 is a side view of the obstacle and derailment detection device of Figure 2.

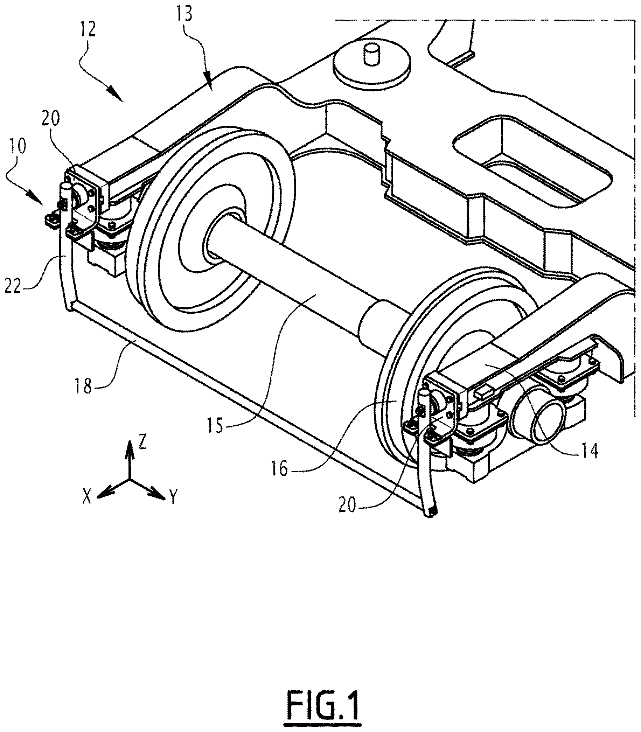

Figure 1 shows an obstacle and derailment detection device 10 according to an example of embodiment. The detection device 10 is attached to a bogie 12 of a railway vehicle, the railway vehicle extending in a longitudinal direction X.

In this specification, the wordings "front", "rear" or "backward" are defined in the longitudinal direction X, regarding the direction movement of the railway vehicle.

The bogie 12 is a leading bogie, i.e. the first bogie from the front of the railway vehicle. Thus, the detection device 10 is arranged at a front part of the railway vehicle.

The bogie 12 comprises a bogie frame 13, forming a structural part of the bogie.

The bogie frame 13 comprises two front longitudinal beams 14 holding a front axle 15. The front axle 15 extends in the transverse direction Y, and it bears two front wheels 16.

It should be noticed that the bogie 12 could also comprise any usual equipment, such as motorization means, etc.

The bogie frame 13 also comprises two (not shown) rear longitudinal beams holding a rear axle. The rear axle bears two rear wheels.

The detection device 10 comprises a transverse beam 18, extending in a transversal direction Y perpendicular to the longitudinal direction X. In this specification, we also consider a vertical direction Z that is perpendicular to the longitudinal direction X and to the transversal direction X.

The transverse beam 18 is preferentially made of aluminum.

The transverse beam 18 is arranged in front of the front axle 15, parallel to this front axle 15.

The detection device 10 comprises at least one support 20 intended to be fixed on the railway vehicle. More particularly, the detection device 10 comprises two supports 20, each support 20 being fixed on a respective of the front longitudinal beams 14, at the front of said front longitudinal beams 14.

For each support 20, the detection device 10 comprises one rod 22 holding the transverse beam. Each rod 22 is preferentially made of aluminum.

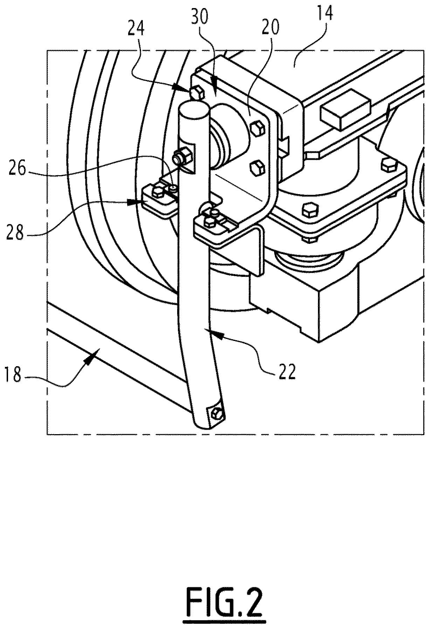

One of the supports 20, and the corresponding rod 22, are shown with more details on Figure 2.

The support 20 is fastened to the corresponding front longitudinal beam 14 by fastening means 24, for instance comprising screws or any other suitable fastening means.

The detection device 10 comprises a pivot connection 26 defined around an axis parallel to the transverse direction, for connecting the rod 22 to the support 20. The support 20 comprises a support bracket 28 holding this pivot connection 26.

For instance, the support 20 is made of a bent plate comprising a first part for fastening to the front longitudinal beam 14 and a second part forming the support bracket 28, with a bent part separating these parts. The first part extends substantially vertically, and the second part extends substantially horizontally.

The rod 22 comprises an upper part 22a connected to the support 20 by means of the pivot connection 26, and a lower part 22b fastened to the transverse beam 18, in particular by means of a screw.

Because of the pivot connection 26, the rod 22 is able to swing around the axis. Thus, the transverse beam 18 is also able to swing around the axis.

The detection device 10 also comprises retaining means 30 for retaining the transverse beam 18 in a rest position while not subjected to a force or while subjected to an angular couple inferior to a predefined threshold.

In the shown example, the retaining means 30 comprise at least first 32 and second 34 complementary magnetic elements. The first magnetic element 32 is arranged on the rod 22, preferentially above the pivot connection 26. The second magnetic element 34 is arranged on the support 20, so that it is in contact with the first magnetic element 32 in the rest position.

For example, the first magnetic element 32 is a metal disc, and the second magnetic element 34 is a permanent magnet.

Said predefined threshold depends on the magnetic force of the first 32 and second 34 complementary magnetic elements. A man skilled would know how to determine which magnetic elements to use as a function of the desired threshold.

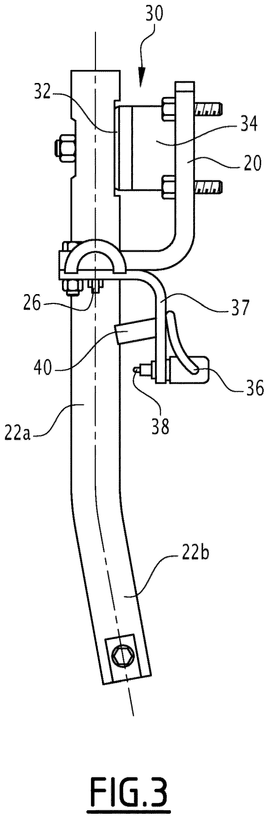

As it is shown on Figure 3, each rod 22 is preferentially shaped so that the transverse beam 18 is arranged backward the axis of the pivot connection 26, regarding the longitudinal direction X, so that the transverse beam 18 is able to swing anticlockwise around the axis when submitted to a force in a vertical upward direction.

The shape of the rod 22 facilitates the swing of the transverse beam 18 in case of derailment. Indeed, in case of derailment, the transverse beam 18 comes colliding with the rail in a vertical direction, so that the transverse beam is submitted to a force in a vertical upward direction. The shape of the rod 22 then makes the transverse beam 18 and the rod 22 swing towards the contact actuator.

It should be noticed that the speed of the railway vehicle also participates in swinging the rod 22 when the transverse beam 18 is in contact with the rail.

For instance, the upper part 22a is substantially straight and substantially vertical, and the lower part 22b is substantially straight and forms an angle with the upper part 22a, for instance an angle between 5° and 20°, for instance substantially equal to 10°. This angle is determined as a function of said predefined threshold, as an optimal angle allowing the magnetic means 30 to detach when the transverse beam 18 is subjected to a force in the vertical upward direction that corresponds to a derailment, as specified hereafter.

It appears that, when the transverse beam 18 is pushed backward by a longitudinal force the longitudinal direction X, or pushed upward by a vertical force in the vertical direction Z, it swings around the axis of the pivot connection 26 if the longitudinal force or the vertical force generates an angular couple superior to the angular couple generated by the magnetic force of the magnetic means 30. Thus, the predefined threshold corresponds to the angular couple generated by the magnetic force of the magnetic means 30.

In case of an obstacle on the tracks, the transverse beam 18 comes colliding with this obstacle, causing a longitudinal force. If this longitudinal force is not enough to detach the magnetic means, the transverse beam 18 stays in its rest position: the obstacle is not large enough to be considered as a danger for the railway vehicle.

Usually, the magnetic means 30 are configured to detach if the longitudinal force is greater than 100 daN.

In case of a derailment, the wheels 16 climb the rail and drop off the rail, so that the rail comes colliding with the transverse beam 18 with an upward vertical force, and pushed backward because of the speed of the vehicle. If the transverse beam 18 is subjected to vertical force that is not enough to detach the magnetic means 30, the transverse beam 18 stays in its rest position: this vertical force is not due to a derailment.

Usually, the shape of the rod 22 and the magnetic means 30 are configured to detach if the vertical force is greater than 500 daN.

In case the magnetic means 30 detach, the transverse beam 18 and the rod 22 swing anticlockwise.

The detection device 10 comprises a contact actuator 36 (which can be seen on figure 3), held by the support 20, and configured to generate an emergency signal when the rod 22 meets this contact actuator 36.

Preferentially, the support 20 comprises a secondary support 37, the contact actuator being held by this secondary support 37. The secondary support 37 is for example fastened to the support bracket 28, under this support bracket 28.

For example, the contact actuator 36 comprises a switch 38 arranged backward the rod 22, to be actuated when the rods 22 meets this switch 38 when the rod 22 swing anticlockwise.

It should be noticed that the detection device 10 could comprise only one contact actuator 36, or in a variant one contact actuator for each rod 22. In this last case, the emergency signal could be generated only when the two switches are actuated, or in a variant when any of the switches is actuated.

The railway vehicle comprises a classical emergency braking system, connected to the contact actuator 36 to be able to receive the emergency signal. The emergency braking system is configured to implement an emergency braking operation when receiving the emergency signal.

In a variant, or additionally, the emergency signal could be sent to an alarm system, which emits an alarm when receiving the emergency signal.

Preferentially, the detection device 10 comprises a mechanical stop 40 arranged on the support 20, intended to limit the swing of the rod 22 around the axis. For instance, the mechanical stop 40 is arranged on the secondary support 37.

This mechanical stop 40 is arranged to stop the swing after the rod 22 meets the switch 38. This mechanical stop 40 allows preventing the transverse beam 38 from coming colliding with the wheels 16, but also from damaging the switch 38.

It appears that the invention allows detecting both an obstacle or a derailment, for allowing an emergency braking operation.

## Claims

1. An obstacle and derailment detection device (10) for a railway vehicle extending in a longitudinal direction (X), comprising a transverse beam (18) intended to be arranged on a front part of the railway vehicle, wherein:
- the detection device (10) comprises at least one support (20) intended to be fixed on the railway vehicle, at least one rod (22) holding the transverse beam (18), and a pivot connection (26) around an axis for connecting the rod (22) to the support (20), so that the transverse beam (18) is able to swing around the axis,
- the detection device (10) comprises a contact actuator (36), arranged on the support (20), configured to generate an emergency signal when the rod (22) comes in contact with this contact actuator (36)
- the detection device (10) comprises retaining means (30) for retaining the transverse beam (18) in a rest position while not subjected to a force or while subjected to an angular couple inferior to a predefined threshold,
**characterized in that** the retaining means (30) comprise at least first (32) and second (34) complementary magnetic elements, with the first magnetic (32) element being arranged on the rod (22) and the second magnetic element (34) being arranged on the support (20).

2. The detection device (10) according to claim 1, wherein the contact actuator (36) comprises a switch (38) arranged backward the rod regarding the direction movement of the railway vehicle, to be actuated when the rod (22) comes into contact with this switch (38).

3. The detection device (10) according to any of preceding claims, comprising a mechanical stop (40) arranged on the support (20), intended to limit the swing of the transverse beam (18) around the axis.

4. The detection device (10) according to any of preceding claims, wherein each rod (22) is shaped so that the transverse beam (18) is arranged backward the axis in the longitudinal direction (X) regarding the direction movement of the railway vehicle, so that the transverse beam (18) and the rod (22) swing towards the contact actuator when submitted to a force in a vertical upward direction,

5. The detection device (10) according to claim 4, wherein the rod (22) comprises a straight upper part (22a) connected to the support (20) by means of the pivot connection (26), and a lower part (22b) connected to the transverse beam (18), the upper part (22a) forming an angle with the lower part (22b), for instance an angle between 5° and 20°, for instance substantially equal to 10°.

6. A railway vehicle, **characterized in that** it comprises the detection device (10) according to any of preceding claims, arranged on a front part of the vehicle.

7. The railway vehicle according to claim 6, comprising a leading bogie (12) having a bogie frame (13), the detection device (10) being arranged in front of the leading bogie (12), the support (20) being fastened to the bogie frame (13).

8. The railway vehicle according to claim 6 or 7, comprising an emergency braking system, connected to the contact actuator (36) to be able to receive the emergency signal, the emergency braking system being configured to implement an emergency braking operation when receiving the emergency signal.

## Patentansprüche

1. Hindernis- und Entgleisungserkennungsvorrichtung (10) für ein sich in einer Längsrichtung (X) erstreckendes Schienenfahrzeug, mit einem Querträger (18), der dazu bestimmt ist, an einem vorderen Teil des Schienenfahrzeugs angeordnet zu sein, **dadurch gekennzeichnet, dass**:
- die Erkennungsvorrichtung (10) mindestens einen Halterung (20), die dazu bestimmt ist, an dem Schienenfahrzeug befestigt zu werden, mindestens eine Stange (22), die den Querträger (18) hält, und eine Schwenkverbindung (26) um eine Achse, um die Stange (22) mit der Halterung (20) zu verbinden, sodass der Querträger (18) um die Achse schwenken kann, umfasst,
- die Erkennungsvorrichtung (10) einen Kontaktaktuator (36) umfasst, der an der Halterung (20) angeordnet ist und konfiguriert ist, um ein Notsignal zu erzeugen, wenn die Stange (22) mit diesem Kontaktaktuator (36) in Kontakt kommt,
- die Erkennungsvorrichtung (10) Halteeinrichtungen (30) umfasst, um den Querträger (18) in einer Ruheposition zu halten, wenn er keiner Kraft oder einem Winkelpaar unterhalb eines vordefinierten Schwellenwerts ausgesetzt ist,
**dadurch gekennzeichnet, dass** die Halteeinrichtungen (30) mindestens ein erstes (32) und ein zweites (34) komplementäres magnetisches Element umfassen, wobei das erste magnetische Element (32) an der Stange (22) und das zweite magnetische Element (34) an der Halterung (20) angeordnet ist.

2. Erkennungsvorrichtung (10) nach Anspruch 1, wobei der Kontaktaktuator (36) einen Schalter (38) umfasst, der in Bezug auf die Bewegungsrichtung des Schienenfahrzeugs hinter der Stange angeordnet ist, um betätigt zu werden, wenn die Stange (22) mit diesem Schalter (38) in Kontakt kommt.

3. Erkennungsvorrichtung (10) nach einem der vorherigen Ansprüche, umfassend einen mechanischen Anschlag (40), der an der Halterung (20) angeordnet ist und dazu bestimmt ist, das Schwingen des Querträgers (18) um die Achse zu begrenzen.

4. Erkennungsvorrichtung (10) nach einem der vorherigen Ansprüche, wobei jede Stange (22) geformt ist, sodass der Querträger (18) hinter der Achse in der Längsrichtung (X) in Bezug auf die Bewegungsrichtung des Schienenfahrzeugs angeordnet ist, sodass der Querträger (18) und die Stange (22) in Richtung des Kontaktaktuators schwingen, wenn sie einer Kraft in einer vertikalen Aufwärtsrichtung ausgesetzt werden,

5. Erkennungsvorrichtung (10) nach Anspruch 4, **dadurch gekennzeichnet, dass** die Stange (22) einen geraden oberen Teil (22a), der mittels der Schwenkverbindung (26) mit der Halterung (20) verbunden ist, und einen unteren Teil (22b), der mit dem Querträger (18) verbunden ist, umfasst, wobei der obere Teil (22a) mit dem unteren Teil (22b) einen Winkel bildet, beispielsweise einen Winkel zwischen 5° und 20°, beispielsweise im Wesentlichen gleich wie 10°.

6. Schienenfahrzeug, **dadurch gekennzeichnet, dass** es die Erkennungsvorrichtung (10) nach einem der vorherigen Ansprüche umfasst, die an einem vorderen Teil des Fahrzeugs angeordnet ist.

7. Schienenfahrzeug nach Anspruch 6, umfassend ein Vorlaufdrehgestell (12), das einen Drehgestellrahmen (13) aufweist, wobei die Erkennungsvorrichtung (10) vor dem Vorlaufdrehgestell (12) angeordnet ist, wobei die Halterung (20) am Drehgestellrahmen (13) befestigt ist.

8. Schienenfahrzeug nach Anspruch 6 oder 7, umfassend ein Notbremssystem, das mit dem Kontaktaktuator (36) verbunden ist, um in der Lage zu sein, das Notsignal zu empfangen, wobei das Notbremssystem konfiguriert ist, um bei Empfangen des Notsignals eine Notbremsung zu implementieren.

## Revendications

1. Dispositif de détection d'obstacle et de déraillement (10) pour un véhicule ferroviaire s'étendant dans une direction longitudinale (X), comprenant une poutre transversale (18) destinée à être disposée sur une partie avant du véhicule ferroviaire, dans lequel :
- le dispositif de détection (10) comprend au moins un support (20) destiné à être fixé sur le véhicule ferroviaire, au moins une tige (22) retenant la poutre transversale (18), et une liaison pivot (26) autour d'un axe pour relier la tige (22) au support (20), de sorte que la poutre transversale (18) puisse osciller autour de l'axe,
- le dispositif de détection (10) comprend un actionneur de contact (36), disposé sur le support (20), configuré pour générer un signal d'urgence lorsque la tige (22) entre en contact avec cet actionneur de contact (36)
- le dispositif de détection (10) comprend des moyens de retenue (30) pour maintenir la poutre transversale (18) dans une position de repos lorsqu'elle n'est pas soumise à une force ou lorsqu'elle est soumise à un couple angulaire inférieur à un seuil prédéfini,
**caractérisé en ce que** les moyens de retenue (30) comprennent au moins un premier (32) et un second (34) éléments magnétiques complémentaires, le premier élément magnétique (32) étant disposé sur la tige (22) et le second élément magnétique (34) étant disposé sur le support (20).

2. Dispositif de détection (10) conforme à la revendication 1, dans lequel l'actionneur de contact (36) comprend un interrupteur (38) disposé à l'arrière de la tige par rapport à la direction du mouvement du véhicule ferroviaire, pour être actionné lorsque la tige (22) entre en contact avec cet interrupteur (38).

3. Dispositif de détection (10) conforme à l'une quelconque des revendications précédentes, comprenant une butée mécanique (40) disposée sur le support (20), destinée à limiter l'oscillation de la poutre transversale (18) autour de l'axe.

4. Dispositif de détection (10) conforme à l'une quelconque des revendications précédentes, dans lequel chaque tige (22) est formée de telle sorte que la poutre transversale (18) est disposée en arrière de l'axe dans la direction longitudinale (X) par rapport à la direction de déplacement du véhicule ferroviaire, de telle sorte que la poutre transversale (18) et la tige (22) basculent vers l'actionneur de contact lorsqu'elles sont soumises à une force dans une direction verticale ascendante,

5. Dispositif de détection (10) conforme à la revendication 4, dans lequel la tige (22) comprend une partie supérieure droite (22a) reliée au support (20) au moyen de la liaison pivot (26), et une partie inférieure (22b) reliée à la poutre transversale (18), la partie supérieure (22a) formant un angle avec la partie inférieure (22b), par exemple un angle compris entre 5° et 20°, par exemple sensiblement égal à 10°.

6. Véhicule ferroviaire, **caractérisé en ce qu'**il comprend le dispositif de détection (10) conforme à l'une quelconque des revendications précédentes, disposé sur une partie avant du véhicule.

7. Véhicule ferroviaire conforme à la revendication 6, comprenant un bogie de tête (12) ayant un châssis de bogie (13), le dispositif de détection (10) étant disposé devant le bogie de tête (12), le support (20) étant fixé au châssis de bogie (13).

8. Véhicule ferroviaire conforme à la revendication 6 ou 7, comprenant un système de freinage d'urgence, connecté à l'actionneur de contact (36) pour pouvoir recevoir le signal d'urgence, le système de freinage d'urgence étant configuré pour mettre en oeuvre une opération de freinage d'urgence lors de la réception du signal d'urgence.
